# EUROPEAN PATENT APPLICATION

(11) **EP 1 283 430 A2**
(43) Date of publication of application: **12.02.2003**
(21) Application number: 02255408.3
(22) Date of filing: 01.08.2002
(51) Int. Cl.: G02B 6/44

(54) **An optical waveguide feedthrough**

(30) Priority: 03.08.2001 GB 0118963
(71) Applicant: Alcatel Optronics UK Limited, Livingston EH54 8SF (GB)
(72) Inventor: Yeandle, Jonathan, Paignton, Devon T24 5HL (GB)
(74) Representative: McDonough, Jonathan

(57) **Abstract**

An optical waveguide feedthrough comprising
a flexible diaphragm having an outer rim portion and a central ledge portion;
the outer rim portion being adapted to be sealed to an optical package;
the central ledge portion comprising an aperture extending through the feedthrough;
through for receiving the optical wave guide;
wherein the ledge portion proximate to the aperture comprises at least one support face extending substantially parallel to the axis of the aperture and arranged to support the waveguide over an extended area;

## Description

The present invention relates to optical waveguide feedthroughs and also packages for optoelectronic components including such feedthroughs. More particularly, but not exclusively, the present invention relates to optical waveguide feedthroughs including a support face arranged to support the waveguide preventing undue strain on the waveguide.

Optical waveguides are typically connected to optical components located within component packaging. The optical waveguide is fed through an aperture in the packaging and maintained in place by a short solder joint. Such joints are relatively inflexible in nature. This and the small area of contact between the waveguide and the joint can result in both the waveguide and joint becoming stressed due to the mismatch in thermal expansion between waveguide and package.

It is known to feed a precision capillary through the aperture in the packaging and then the waveguide through the capillary. Whilst the capillary supports the waveguide, the waveguide can still become stressed due to the mismatch in thermal expansion coefficients between waveguide and package. In addition, such capillaries are expensive and difficult to manufacture.

It is an object of the current invention to seek to overcome the disadvantages of such feedthroughs.

Accordingly, in a first aspect the present invention provides an optical waveguide feedthrough comprising
a flexible diaphragm having an outer rim portion and a central ledge portion;
the outer rim portion being adapted to be sealed to an optical package;
the central ledge portion comprising an aperture extending through the feedthrough for receiving the optical wave guide;
wherein the ledge portion proximate to the aperture comprises at least one support face extending substantially parallel to the axis of the aperture and arranged to support the waveguide over an extended area.

The extended area of contact between the feedthrough and the waveguide increases the support offered to the waveguide, preventing the waveguide becoming stressed at the joint in use. The extended area of contact also reduces the likelihood of the joint itself becoming stressed, as does the flexible nature of the diaphragm.

The optical waveguide feedthrough has the advantage that its shape is such that it can be manufactured by techniques which are by nature low cost and suited to volume production. In addition parameters affecting important features such as the number of apertures extending through the feedthrough or the stiffness of the diaphragm may be readily altered.

Preferably the at least one support face is planer.

Preferably the optical waveguide feedthrough comprises first and second support faces;
the first support face being arranged to support the waveguide on a first side of the aperture; and
the second support face being arranged to support the waveguide on the opposite side of the aperture.

This has the advantage that the only position where the diaphragm is in contact around the full periphery of the waveguide is at the aperture. For most of the length of the contact between the waveguide and the diaphragm, the diaphragm is only in contact with the one side of the waveguide. This produces a very low tensile stress joint between the waveguide and diaphragm.

Preferably at least one support face comprises a groove for receiving the optical waveguide. This maintains the waveguide in the correct position on the support face.

The plane of the rim portion can be inclined to the axis of the aperture. This ensures good visability when connecting the diaphragm to the waveguide and to the package.

The rim portion can comprise a ripple, preferably an annular ripple. This greatly reduces the in plane stiffness of the diaphragm. Preferably at least two thirds of the rim portion is formed into the at least one ripple.

The stiffness of the diaphragm along the axis of the aperture is less than 1.5N/mm, preferably less than 1.2N/mm, more preferably less than 0.5N/mm, more preferably less than 0.3N/mm.

The stiffness of the diaphragm in the plane of the rim portion is preferably less than 10N/mm, more preferably less than 5N/mm.

In a further aspect of the invention there is provided a package for an optoelectronic component, the package comprising
a package wall having a feedthrough aperture; and
an optical waveguide feedthrough extending across the feedthrough aperture;
the feedthrough comprising a diaphragm having an outer rim portion and a central ledge portion, a portion of the outer rim portion being sealed to the package wall;
the central ledge portion comprising an aperture extending through the feedthrough for receiving the optical wave guide;
wherein the ledge portion proximate to the aperture comprises at least one support face extending parallel to the axis of the aperture and arranged to support the waveguide over an extended area.

Preferably the package for an optoelectronic component further comprises an optical waveguide extending through the aperture, the waveguide being connected to the ledge portion over an extended area.

In a further aspect of the invention there is provided an optical waveguide feedthrough comprising
a diaphragm having an outer rim portion and a central ledge portion;
the outer rim portion being adapted to be sealed to an optical package;
the central ledge portion comprising an aperture extending through the feedthrough for receiving an optical waveguide; and
an optical waveguide extending through the aperture;
wherein the stiffness of the diaphragm along the axis of the aperture is less than that of the optical waveguide.

The relatively flexible nature of the diaphragm compared to the waveguide ensures that the waveguide does not become stressed by the mismatched thermal expansion between the optical waveguide and packaging.

The present invention will now be described by way of example only and not in any limitive sense with reference to the accompanying drawings in which
Figure 1 shows in cross section a known joint between waveguide and optical packaging;
Figure 2 shows an optical waveguide feedthrough according to the invention;
Figure 3 shows the central portion of a diaphragm of a further embodiment of an optical waveguide feedthrough according to the invention;
Figure 4 shows the diaphragm of Figure 3 in cross section; and,
Figure 5 shows a cross section of an optical package comprising two optical waveguide feedthroughs according to the invention.

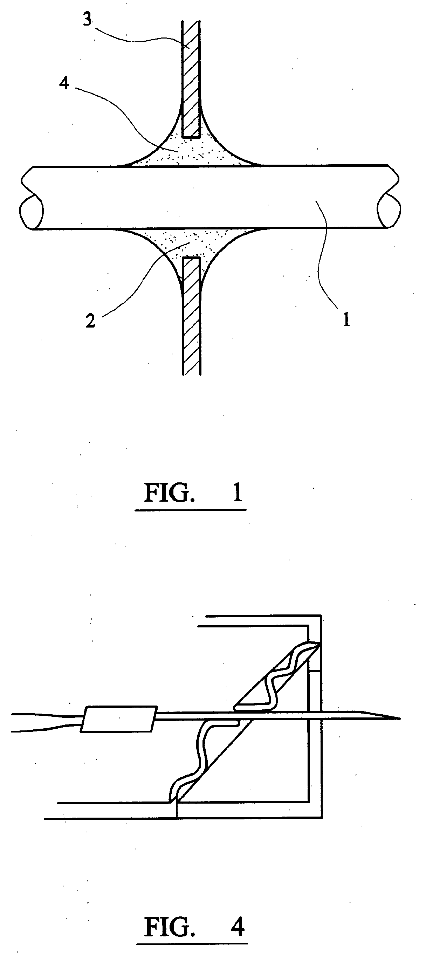

Shown in cross section in Figure 1 is a portion of an optical feedthrough comprising an optical fibre 1. The optical fibre 1 passes through an aperture 2 in optical package 3 and is connected to an optical component (not shown) within the packaging. The fibre 1 is fixed in place with respect to the packaging by a small solder joint 4.

If the temperature of the optical package is increased it will expand, increasing the distance between the optical component within the package and the solder joint 4. The optical fibre 1 will also expand but by a different amount. As solder joint 4 is relatively inflexible the difference in thermal expansion of the fibre and package will result in stress in both fibre 1 and solder joint 4.

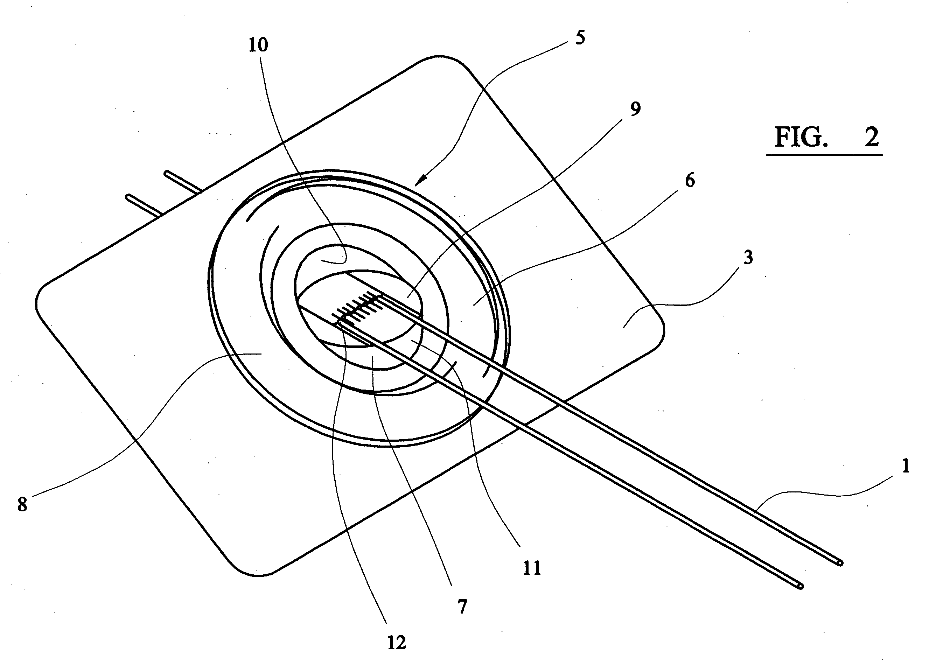

Shown in Figure 2 is an optical waveguide feedthrough according to the invention. The waveguide feedthrough comprises a flexible diaphragm 5 having an outer rim portion 6 and an inner ledge portion 7. The outer rim portion 6 is hermetically sealed across an aperture in optical packaging 3, only a portion of which is shown. The outer rim portion 6 is formed into an annular ripple 8. The ripple is designed to reduce the stiffness of the diaphragm in the plane of the outer rim portion 6.

Extending inwardly from the outer rim portion 6 is ledge portion 7. The ledge portion comprises a substantially planer support face 9 connected to the outer rim portion 6 by support walls 10, 11. The plane of the support faces is inclined to the plane of the outer rim portion 6.

Extending through support face 9 are a plurality of co-axial apertures 12. Extending through each of the apertures 12 is an optical fibre 1, only two of which are shown. These optical fibres 1 are connected to one or more optical components (not shown) within the packaging.

In use, the optical fibres 1 are slid through apertures 12 in the diaphragm. The ends of the optical fibres are connected to optical components (not shown) and the optical components inserted through a aperture into the optical packaging. Once the components are correctly positioned the diaphragm is slid along the fibres and hermetically sealed over the aperture in the packaging 3 as shown. The fibres are then soldered to the diaphragm.

Since the plane of the support face 9 is inclined to that of the outer rim portion 6 good visibility is afforded by the diaphragm when connecting the diaphragm to the fibres and also to the packaging. In addition, the large size of the diaphragm enables a large aperture to be used. This simplifies the positioning of the optical components within the packaging.

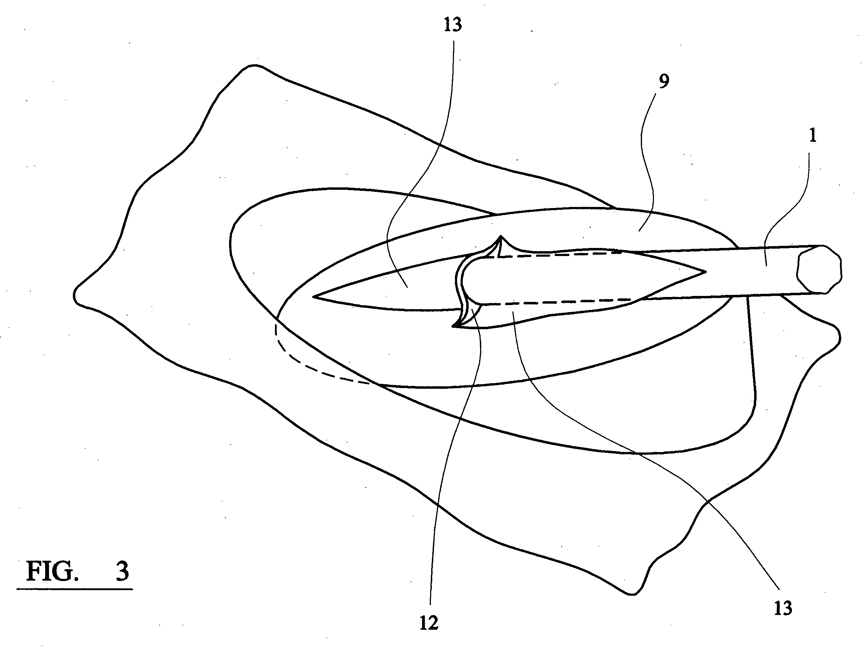

Shown in Figure 3 is the central ledge portion 9 of a further embodiment of the diaphragm according to the invention. In this embodiment the ledge portion 9 comprises only one aperture 12 through which an optical fibre extends. Fibre 1 is positioned within a groove 13 extending on both sides of the aperture. The optical fibre 1 is held in place by solder (not shown) within the groove 13 over an extended area.

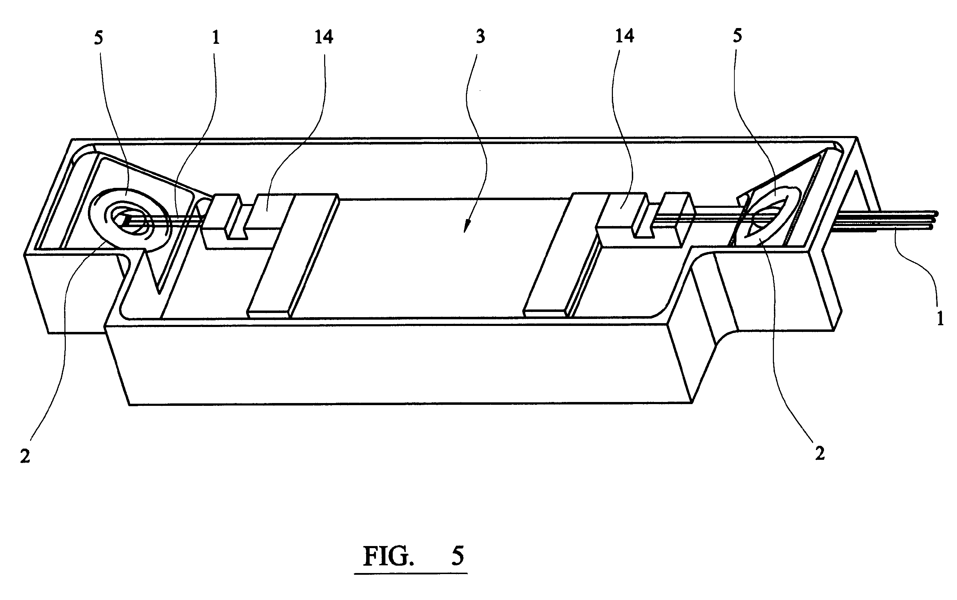

The diaphragm of Figure 3 is shown in cross section in Figure 4. As can be seen the outer rim portion 6 of this embodiment includes two annular ripples to reduce in-plane stiffness. On one side of the aperture the optical fibre is in contact with the diaphragm along its lower edge. On the other side of the aperture the fibre is in contact with the diaphragm along its upper edge. Its only at the aperture itself that the diaphragm is in contact with the optical fibre completely around the periphery of the fibre. This is very important in producing a very low stress joint between fibre and diaphragm.

Alternative embodiments of the invention may include different number of ripples in the outer rim portion 6. Preferably however the ripples will cover at least two thirds of the area of the rim portion 6.

The material choice and finish of the diaphragm depend upon the type of soldering envisioned. If glass solder is to be used the diaphragm is typically stainless steel or nickle alloy. For a metal solder the diaphragm typically hard brass with a gold or nickel plate. The thickness of the diaphragm is typically in the range 3um to 5um stainless steel and 10um for brass.

A typical thermal mis-match to be accommodated by the diaphragm is of the order 0.26 mm. A safe axial load on the optical fibres depend upon many factors but typically would be less than 0.3N per fibre. Accordingly the stiffness of the diaphragm measured co-axial with the optical fibre is less than 1.5N/mm however stiffness values for examples, less than 2N/mm or even less than 0.5N/mm or 0.3N/mm are to be preferred.

The in plane stiffness of the diaphragm is typically of the 5N/mm to 10n/mm for the gauges and materials discussed above although lower stiffness are to be preferred.

Shown in figure 5 is an optical package 3 including two optical feedthroughs according to the invention arranged on opposing sides of the package 3. The apertures 2 provided in the package 3 are large enough to accommodate fibre V groove arrays (FVA's) 14. During assembly this allows one of the FVA's 14 to be backed out through the respective aperture 2 (at this stage the respective diaphragm 5 is not yet threaded onto these fibres 1) while the opposing set of fibres 1 is threaded through the opposing diaphragm 5 which may already be fixed in place. These fibres 1 are not as yet soldered so they can still slide in the diaphragm 5 to allow the FVA 14 to be backed up in the other direction to facilitate fitting of the other diaphragm 5. When both diaphragms 5 are fixed in place then the fibres 1 are soldered in their final positions. This flexibility of movement during location of the FVA 14 in the package enables gross curvature of the input/output fibres 1 to be avoided so reducing damage to the fibres 1.

In alternative embodiments the diaphragm can be other shapes such as elliptical, square or rectangular.

## Claims

1. An optical waveguide feedthrough comprising
a flexible diaphragm having an outer rim portion and a central ledge portion;
the outer rim portion being adapted to be sealed to an optical package;
the central ledge portion comprising an aperture extending through the feed through for receiving the optical wave guide;
wherein the ledge portion proximate to the aperture comprises at least one support face extending substantially parallel to the axis of the aperture and arranged to support the waveguide over an extended area.

2. An optical waveguide feedthrough as claimed in claim 1,
wherein the at least one support face is planar.

3. An optical waveguide feedthrough as claimed in claim 1 comprising first and second support faces;
the first support face being arranged to support the waveguide on a first side of the aperture; and
the second support face being arranged to support the waveguide on the opposite side of the aperture.

4. An optical waveguide feedthrough as claimed in any one of claims 1 to 3, wherein the at least one support face comprises a groove for receiving the optical waveguide.

5. An optical waveguide feedthrough as claimed in any one of claims 1 to 4, wherein the plane of the rim portion is inclined to the access of the aperture.

6. An optical waveguide feedthrough as claimed in any one of claims 1 to 5, wherein the rim portion comprises at least one ripple, preferably an annular ripple.

7. An optical waveguide feedthrough as claimed in claim 6, wherein at least two thirds of the area of the rim portion is formed into at least one ripple.

8. An optical wavelength feedthrough as claimed in any one of claims 1 to 7, wherein the stiffness of the diaphragm along the axis of the aperture is less than 1.5 N/mm preferably less than 1.2N/mm, more preferably less than 0.5N/mm, more preferably less than 0.3N/mm.

9. An optical waveguide feedthrough as claimed in any one of claims 1 to 8, wherein the stiffness of the diaphragm in the plane of the rim portion is preferably less 10N/mm, more preferably less than 5N/mm

10. A package for an optoelectronic component, the package comprising
a package wall having a feedthrough aperture; and
an optical waveguide feedthrough extending across the feedthrough aperture;
the feedthrough comprising a diaphragm having an outer rim portion and a central ledge portion, a portion of the outer rim portion being sealed to the package wall;
the central ledge portion comprising an aperture extending through the feedthrough for receiving the optical wave guide;
wherein the ledge portion proximate to the aperture comprises at least one support face extending parallel to access of the aperture and arranged to support the waveguide over an extended area.

11. A package as claimed in claim 10, further comprising an optical waveguide extending through the aperture, the waveguide being connected to the ledge portion over an extended area.

12. An optical waveguide feedthrough comprising:-
a diaphragm having an outer rim portion and a central ledge portion;
the outer rim portion being adapted to be sealed to an optical package;
the central ledge portion comprising an aperture extending through the feedthrough for receiving an optical waveguide; and
an optical waveguide extending through the aperture;
wherein the stiffness of the diaphragm along the axis of the aperture is less than that of the optical waveguide.
